# EUROPÄISCHE PATENTSCHRIFT

(11) **EP 2 621 673 B1**
(45) Veröffentlichungstag und Bekanntmachung des Hinweises auf die Patenterteilung: **24.12.2014**
(21) Anmeldenummer: 11782535.6
(22) Anmeldetag: 28.09.2011
(51) Int. Cl.: B23Q 11/08

(54) **TELESKOPISCHE SCHUTZABDECKUNG**
TELESCOPIC PROTECTIVE COVERING
COUVERTURE DE PROTECTION

(30) Priorität: 28.09.2010 DE 202010013677 U
(43) Veröffentlichungstag der Anmeldung: 07.08.2013
(73) Patentinhaber: Arno Arnold GmbH, 63179 Obertshausen (DE)
(72) Erfinder: MANG, Wolf-Matthias, 63179 Obertshausen (DE); KREUTZER, Thomas, 64291 Darmstadt (DE)
(74) Vertreter: advotec.
(86) Internationale Anmeldenummer: PCT/DE2011/001784
(87) Internationale Veröffentlichungsnummer: WO 2012/041293

(56) Entgegenhaltungen:
- DE-A1- 10 308 024
- DE-U1- 20 108 661

## Beschreibung

Die Erfindung betrifft eine Schutzabdeckung nach dem Oberbegriff des Patentanspruchs 1 (siehe, z.B., DE 103 08 024 A).

Schutzabdeckungen der genannten Art dienen beispielsweise bei Werkzeugmaschinen dazu, bewegliche Teile, wie Antriebe, gegen einen unbeabsichtigten Zugriff eines Benutzers der Maschine abzusichern und den Arbeitsraum der Werkzeugmaschine derart abzuschließen, dass keine Späne oder andere Teile und Partikel in einer den Benutzer gefährdenden Weise austreten können. Übliche Schutzabdeckungen weisen dazu Schutzabdeckungssegmente in Form von L-förmigen Blechen auf, die einander teleskopartig mit einem ihrer Schenkel hintergreifen und so eine im wesentlichen geschlossene Abdeckung bilden. Da insbesondere die einander übergreifenden Schenkel jedoch lediglich lose aufeinanderliegen, ist entweder kein ausreichend dichter Abschluss möglich oder es müssen konstruktiv aufwendige Ergänzungen vorgenommen werden. So werden üblicherweise gattungsgemäße Schutzabdeckungen zusätzlich mit einem geschlossenen Faltenbalg auf der Rückseite versehen, um einen vergleichsweise dichten Abschluss zu gewährleisten. Dies macht eine derartige Schutzabdeckung jedoch aufwendig herzustellen und teuer. Zudem wird das Gewicht der Schutzabdeckung wesentlich erhöht, so dass Schutzabdeckungen größerer Länge aufgrund ihres hohen Gewichtes nicht mehr mit der erforderlichen Geschwindigkeit verfahren werden können.

Ausgehend von diesem Stand der Technik ist es die Aufgabe der vorliegenden Erfindung, eine Schutzabdeckung zu schaffen, die bei vergleichsweise geringem Gewicht einen sicheren Abschluss gewährleistet.

Diese Aufgabe wird durch eine Schutzabdeckung nach der Lehre des Anspruchs 1 gelöst.

Vorteilhafte Ausgestaltungen der Erfindung sind Gegenstand der Unteransprüche.

Die Schutzabdeckung gemäß der vorliegenden Erfindung weist in zunächst bekannter Weise eine Mehrzahl von im wesentlichen L-förmigen Schutzabdeckungssegmenten mit einem Abdeckschenkel und einem Stützschenkel auf. Diese Schutzabdeckungssegmente sind dabei so relativ zueinander angeordnet, dass sie teleskopartig gegeneinander verschiebbar sind, wobei jeweils die Abdeckschenkel benachbarter Schutzabdeckungssegmente unter Bildung einer insgesamt im wesentlichen geschlossenen Fläche aufeinander zur Anlage gelangen. Weiter ist mindestens ein band- oder bahnförmiges flexibles Verbindungselement vorgesehen, das die Stützschenkel der Schutzabdeckungssegmente zumindest zugkraftübertragend miteinander verbindet.

Erfindungsgemäß ist an den Stützschenkeln jeweils mindestens ein elastisches Rückstellelement derart angeordnet, dass es mit seinem ersten Ende am Stützschenkel befestigt ist und mit seinem zweiten Ende unter Vorspannung an einem Abschnitt des Verbindungselementes diesen in Richtung des Stützschenkels drückend anliegt.

Aufgrund dieser Vorspannung wird vom Verbindungselement über das am Stützschenkel angeordnete Rückstellelement ein Moment auf das Schutzabdeckungssegment induziert, das dazu führt, dass die teleskopartig übereinander greifenden Abdeckschenkel gegeneinander gedrückt werden, wodurch sich ein sicherer Abschluss der Schutzabdeckung insgesamt ergibt. Dabei erhöht sich dieses Moment bei zunehmendem Auszug der Schutzabdeckung.

Die Ausgestaltung des Verbindungselementes ist grundsätzlich beliebig, solange zum Einen die zum Auseinanderziehen notwendige Kraft übertragbar ist und zum Anderen darüber beim Auseinanderziehen der Schutzabdeckung eine Kraft auf das Rückstellelement übertragbar ist. Nach einem bevorzugten Ausführungsbeispiel der Erfindung jedoch ist das Verbindungselement ziehharmonikaartig nach Art eines Faltenbalges mit Faltkanten parallel zu den Längskanten der Schenkel der Schutzabdeckungssegmente ausgebildet, wobei zwischen zwei benachbarten Schutzabdeckungssegmenten bzw. zwischen den Stützschenkeln zweier benachbarter Schutzabdeckungssegmente mindestens eine Falte des Verbindungselementes derart angeordnet ist, dass eine erste Faltkante die Kante des Stützschenkels eines Schutzabdeckungssegmentes übergreift bzw. auf dieser aufliegt, eine zweite Faltkante die Kante des Stützschenkels zweiten Schenkels des benachbarten Schutzabdeckungssegmentes übergreift bzw. auf dieser aufliegt und die dazwischen liegende Faltkante den Faltengrund bildet.

Das Material des Verbindungselementes kann beispielsweise ein textiles Material, beispielsweise ein Polyestergewebe nach Art eines klassischen Faltenbalges, sein. Vorzugsweise jedoch besteht das Verbindungselement im wesentlichen aus einem eigensteifen Kunststoffmaterial, insbesondere aus Polypropylen (PP) oder dergleichen. Dabei kann zum einen beim Auszug der Schutzabdeckung die notwendige Kraft auf das Rückstellelement besser übertragen werden und zum anderen führt dies dazu, dass sich sowohl beim Auszug als auch beim Einfahren der Schutzabdeckung die aufgebrachten Zug- bzw. Druckkräfte nicht nur auf jeweils ein Schutzabdeckungssegment übertragen, sondern gleichzeitig auf alle oder zumindest mehrere. Dadurch ergibt sich im Vergleich zum klassischen Faltenbalg ein wesentlich gleichmäßigeres Auseinander- und Zusammenfahren.

Die Materialstärke hängt dabei im wesentlichen vom verwendeten Material ab. Vorzugsweise, insbesondere bei Verwendung von PP, beträgt die Materialstärke des Verbindungselementes zwischen 0,3 und 1,5 mm, vorzugsweise zwischen 0,5 und 1,0 mm.

Zur Verbindung von Verbindungselement und Stützrahmen bzw. Schutzabdeckungssegment weisen die Längskanten der Stützschenkel der Schutzabdeckungssegmente jeweils mindestens eine, vorzugsweise einstückig angeformte, Lasche auf. Diese Lasche ragt dabei im wesentlichen in der Schenkelebene über die Längskante hervor, wobei das Verbindungselement im Bereich seiner Faltkanten, die auf der Kante des Stützschenkels aufliegen oder diesen übergreifen, mit schlitzartigen Ausnehmungen versehen ist, die von den Laschen durchgriffen werden. Aufgrund dieser Gestaltung werden die beim Auseinander- und Zusammenfahren der Schutzabdeckung auftretenenden Zug- bzw. Schubkräfte über das Verbindungselemente auf die Schutzabdeckungssegmente übertragen.

Das Rückstellelement kann in grundsätzlich beliebiger Weise an beliebiger Stelle des Stützschenkels angeordnet werden. Vorzugsweise jedoch weist das Rückstellelement mindestens eine laschenartige Zunge auf, die im Bereich ihres ersten Endes an einer der Laschen am Stützschenkel eines Schutzabdeckungssegmentes befestigt ist. Mit ihrem freien gegenüberliegenden Ende ragt die laschenartige Zunge an der Seite des Stützschenkels, die zum Abdeckschenkels des gleichen Schutzabdeckungssegmentes weist, in Richtung des Faltengrundes des Verbindungselementes. Mit anderen Worten, nach diesem Ausführungsbeispiel dient die Lasche am Stützschenkel gleichzeitig zur Verbindung des Stützschenkels mit dem Verbindungselement und dem Rückstellelement.

Die Verbindung des Rückstellelementes an der Lasche kann dabei beispielsweise durch Nieten, Schrauben, Kleben oder ein sonstiges Fügeverfahren erfolgen. Nach einem besonders bevorzugten Ausführungsbeispiel der Erfindung jedoch erfolgt die Befestigung des Rückstellelementes nach Art einer Clips- oder Rastverbindung.

Nach einem weiteren Ausführungsbeispiel können dabei die Laschen eine schlitzartige zu einer Seitenkante der Lasche hin offene Ausnehmung aufweisen. Die ersten Enden der laschenartigen Zunge des Rückstellelementes können dabei mit einem Verriegelungselement versehen sein, das in die Ausnehmung der Lasche diese bereichsweise hintergreifend einbringbar ist. Dadurch kann in einfacher Weise eine sichere und lösbare Verbindung zwischen Rückstellelement und Stützrahmen erzielt werden.

Nach einem Ausführungsbeispiel kann das Verriegelungselement einstückig an die laschenartige Zunge angeformt sein. Dabei weist das Verriegelungselement einen ersten Bereich, der in die Ausnehmung der Lasche einschiebbar, und einen zweiten Bereich, der den ersten Bereich unter Bildung eines Randes zumindest abschnittsweise überragt, auf, wobei dieser Rand dem ersten Ende der laschenartigen Zunge mit einem Abstand gegenüberliegt, der im wesentlichen der Dicke der Lasche entspricht. Ein derart einstückiges Verriegelungselement ist einfach beispielsweise durch Spritzgießen herstellbar.

In einer alternativen Ausführungsform kann das Verriegelungselement als separater Halter ausgebildet sein. Dieser Halter ist dabei mit einer Anlagefläche und einem Basisbereich versehen. Die laschenartige Zunge des Rückstellelementes weist dabei im Bereich ihres ersten Endes eine Ausnehmung auf, durch die der Halter mit seinem Basisbereich steckbar ist. Vorzugsweise weist dabei der Basisbereich eine schlitzartige Ausnehmung auf, mit der der Halter unter Anordnung des ersten Bereichs der laschenartigen Zunge des Rückstellelementes zwischen der Anlagefläche und der Lasche des Schutzabdeckungssegmentes in die schlitzartige Ausnehmung der Lasche diese bereichsweise übergreifend einschiebbar ist. Ein Vorteil bei dieser Ausgestaltung ist insbesondere, dass die laschenartige Zunge und der Halter aus unterschiedlichen Materialien hergestellt werden können.

Um insbesondere eine Vormontage des Rückstellelementes mit der laschenartigen Zunge und dem Halter zu ermöglichen, weisen der Basisbereich und/oder die Ausnehmung eine klemmende oder rastende Befestigungseinrichtung auf, mit der der Halter in der Ausnehmung der laschenartigen Zunge fixierbar ist. Dies kann beispielsweise dadurch erfolgen, dass der die Ausnehmung in der laschenartigen Zunge durchgreifende Bereich des Halters ein geringes Übermaß zur Ausnehmung aufweist. Dadurch ergibt sich eine verliersichere Fixierung des Halters in der Zunge.

Im einfachsten Fall ist die zungenförmige Lasche als im wesentlichen ebene Fläche ausgebildet, so dass eine flächige Anlage am Verbindungselement erfolgt. Nach einem weiteren Ausführungsbeispiel jedoch sind die zungenförmigen Laschen in einer oder in beiden Achsrichtungen konkav oder konvex ausgebildet oder weisen auf ihrer zum Verbindungselement weisenden Fläche punkt- oder linienförmig vorspringende Kontaktelemente auf. Dadurch lässt sich eine punktuelle oder linienförmige Kraftübertragung erreichen. Ebenso ist denkbar, die Enden der zungenförmigen Lasche finger- oder fächerförmig auszubilden.

Nach einem weiteren Ausführungsbeispiel können die von der Längskante des Stützschenkels wegweisenden Oberkanten der zungenartigen Laschen und/oder der Verriegelungselemente, insbesondere der Anlageflächen der Halter, zumindest geringfügig über die Oberkante der an den Stützschenkeln der Schutzabdeckungssegmente angeordneten Laschen hervorragen und als Gleitflächen ausgebildet sein. Damit lässt sich in einfacher Weise eine zusätzliche Abstützung der Schutzabdeckung realisieren.

In grundsätzlich beliebiger Weise kann an jedem Stützrahmen nur eine Lasche angeordnet sein. Vorzugsweise jedoch sind nach einem weiteren Ausführungsbeispiel mindestens zwei Laschen angeordnet. Dadurch können beispielsweise zwei oder mehr Rückstellelemente Verwendung finden und so größere Rückstellkräfte bzw. Momente übertragen werden. Besonders vorteilhaft ist es dabei, wenn die Rückstellelemente benachbarter Schutzabdeckungssegmente an gegeneinander versetzt angeordneten Laschen und damit selbst gegeneinander versetzt angeordnet sind. Dadurch ergibt sich eine verbesserte Paketierung beim Zusammenfahren der Schutzabdeckung. Mit anderen Worten, die Schutzabdeckung lässt sich weiter zusammenfahren.

Das Rückstellelement bzw. die laschenartige Zunge des Rückstellelementes kann aus grundsätzlich beliebigem Material bestehen, solange die erforderlichen Kräfte übertragen werden können und eine ausreichende Elastizität gegeben ist. So können beispielsweise die Rückstellelemente bzw. die laschenartige Zunge aus Metall, insbesondere aus Federstahl, bestehen. Nach einem bevorzugten Ausführungsbeispiel der Erfindung jedoch besteht die laschenartige Zunge des Rückstellelementes im wesentlichen aus einem Kunststoff- oder Kunststoffverbundmaterial, insbesondere aus einem thermoplastischen Elastomer TPE. Dabei sind sowohl Elastizät als auch Festigkeit, insbesondere Dauerfestigkeit, gegeben.

Für das Verriegelungselement bzw. für den Halter kann weiter Kunststoff- oder Kunststoffverbundmaterial, insbesondere ein Polyoxymethylen (POM), Verwendung finden. Dieses weist im Vergleich zu TPE eine höhere Festigkeit und Härte auf.

Im Fall eines einstückigen Rückstellelementes kann dieses auch aus zwei unterschiedlichen Materialien gespritzt werden, wobei beispielsweise die Zunge aus TPE und das Verriegelungselement aus POM bestehen kann.

In für sich bekannte Weise kann die erfindungsgemäße Schutzabdeckung eine Auszugsbegrenzung, insbesondere in Form einer Bandsperre, und/oder einen an der Rückseite der Schutzabdeckung angeordneten Faltenbalg aufweisen.

Die seitlichen Kanten der Verbindungselemente können gerade ausgebildet sein. Nach einem Ausführungsbeispiel können die seitlichen Kanten, die senkrecht zu den Faltkanten verlaufen, im Bereich zwischen den Stützschenkeln benachbarter Schutzabdeckungselemente nach Art einer Eckfaltung nach Innen gefaltet sein. Dabei können diese Eckfaltungen insbesondere einen elastischen Anschlagpuffer bilden, der beim Zusammenfahren der Schutzabdeckung ein unmittelbares Aneinanderstoßen der benachbarten Schutzabdeckungssegmente verhindert.

Im Folgenden wird die Erfindung anhand lediglich Ausführungsbeispiele zeigender Zeichnungen näher erläutert. Es zeigen
- Fig. 1: in perspektivischer schematischer Darstellung ein erstes Ausführungsbeispiel einer Schutzabdeckung gemäß der Erfindung;
- Fig. 2: die Schutzabdeckung nach Fig. 1 in Ansicht von unten;
- Fig. 3: in seitlicher Ansicht das Verbindungselement der Schutzabdeckung nach den Fig. 1 und 2, wobei ein Schutzabdeckungssegment strichliert angedeutet und ein elastisch verformtes bzw. vorgespanntes Rückstellelement dargestellt ist;
- Fig. 4: in schematischer perspektivischer Darstellung ein zweites Ausführungsbeispiel einer erfindungsgemäßen Schutzabdeckung;
- Fig. 5: in vergrößerter Darstellung den Ausschnitt A der in Fig. 4 dargestellten Schutzabdeckung;
- Fig. 6: die Schutzabdeckung nach Fig. 4 in zusammen geschobenem Zustand;
- Fig. 7: in perspektivischer Darstellung ein Schutzabdeckungssegment der Schutzabdeckung nach Fig. 4;
- Fig. 8: in vergrößerter Darstellung eine Lasche des Schutzabdeckungssegmentes nach Fig. 7;
- Fig. 9: die laschenartige Zunge eines Rückstellelementes der Schutzabdeckung nach Fig. 4;
- Fig. 10: den Halter eines Rückstellelementes der Schutzabdeckung nach Fig. 4;
- Fig. 11: ein weiteres Ausführungsbeispiel eines Rückstellelementes für eine erfindungsgemäße Schutzabdeckung in seitlicher Ansicht.

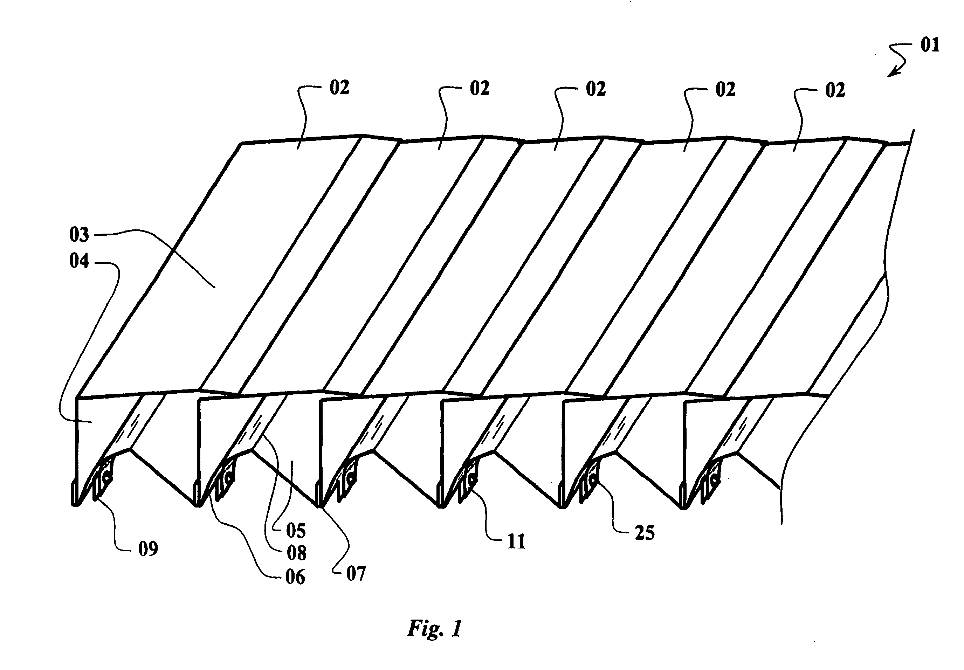

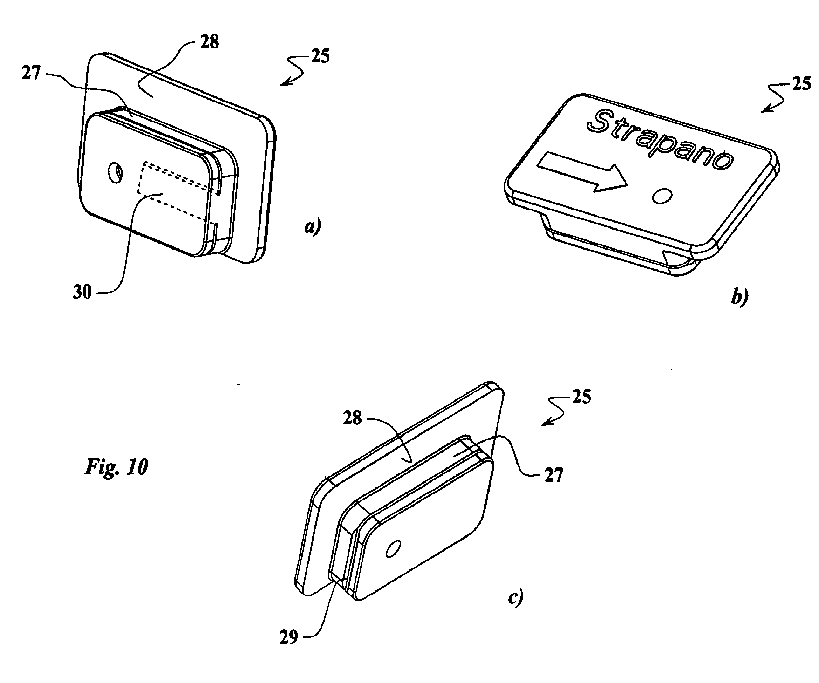

Die in der Fig. 1 dargestellte Schutzabdeckung 1 weist eine Mehrzahl von Schutzabdeckungssegmenten 2 auf, die aus einem Blechmaterial, beispielsweise aus Edelstahl, gefertigt sind. Die Schutzabdeckungssegmente 2 sind jeweils im wesentlichen L-förmig ausgebildet und weisen jeweils einen Abdeckschenkel 3 und einen Stützschenkel 4 auf. Dabei sind die Schutzabdeckungssegmente 2 so relativ zueinander angeordnet, dass sie teleskopartig gegeneinander verschiebbar sind, wobei jeweils die Abdeckschenkel 3 benachbarter Schutzabdeckungssegmente 2 unter Bildung einer insgesamt im wesentlichen geschlossenen Fläche aufeinander zur Anlage gelangen.

Die Schutzabdeckungssegmente 2 sind im dargestellten Ausführungsbeispiel über ein flexibles Verbindungselement 5 in Form einer Bahn aus einem eigensteifen Kunststoffmaterial, insbesondere einem Polyprpoylen (PP), derart verbunden, dass beim Auftreten einer Zugbelastung die Schutzabdeckungssegmente 2 unter Ausdehnung oder Verkürzung der Schutzabdeckung 1 verfahren werden, wobei das Verbindungselement 5 gleichzeitig zur Übertragung von Zug- und Druckkräften und auch als Auszugsbegrenzer dient, um zu verhindern, dass zwei benachbarte Schutzabdeckungssegmente 2 bzw. deren Abdeckschenkel 3 in eine Stellung gelangen, in der diese nicht mehr einander teleskopartig hinter- bzw. übergreifen. Bei dem in der Fig. 1 gezeigten Ausführungsbeispiel erstreckt sich das Verbindungselement 5 über die gesamte Breite der Schutzabdeckung 1.

Das Verbindungselement 5 ist im wesentlichen nach Art eines Faltenbalges ziehharmonikaartig mit Faltkanten parallel zu den Längskanten der Schenkel 3, 4 der Schutzabdeckungssegmente 2 ausgebildet, wobei zwischen zwei benachbarten Schutzabdeckungssegmenten 2 bzw. zwischen den Stützschenkeln 4 zweier benachbarter Schutzabdeckungssegmente 2 eine Falte des Verbindungselementes 5 derart angeordnet ist, dass eine erste Faltkante 6 die Kante des Stützschenkels 4 eines Schutzabdeckungssegmentes 2 übergreift bzw. auf dieser aufliegt, eine zweite Faltkante 7 die Kante des Stützschenkels 4 benachbarten Schutzabdeckungssegmentes 4 übergreift bzw. auf dieser aufliegt und die dazwischen liegende Faltkante den Faltengrund 8 bildet, der zu den Abdeckschenkeln 3 der Schutzabdeckungssegmente 2 weist. Mit anderen Worten, zwischen jeweils zwei benachbarten Schutzabdeckungssegmenten 2 wird eine Falte gebildet, die sich im wesentlichen V-förmig von den Abdeckschenkeln 3 der Schutzabdeckungssegmente 2 weg öffnet.

Die Kanten der Stützschenkel 4 der Schutzabdeckungssegmente 2 sind jeweils mit zwei Laschen 9 versehen, die in der Stützschenkelebene aus der Kante hervorragen. In gleicher Anordnung wie die Laschen 9 an den Schutzabdeckungssegmenten 2 sind die Kanten der Stützschenkel 3 übergreifenden bzw. auf diesen aufliegenden Faltkanten des Verbindungselementes 4 mit schlitzartigen Ausnehmungen 10 versehen, die von den Laschen 9 durchgriffen werden.

An den Laschen 9 sind ferner jeweils Rückstellelemente 11 angeordnet. Diese weisen eine laschenartige Zunge 12 auf, die aus einem zumindest geringfügig federnden Material, hier aus einem thermoplastischen Elastomer TPE, mit einer Materialstärke von 0,6 mm besteht. Die laschenartige Zunge 12 ist mit ihrem ersten Ende an der zugeordneten Lasche 9 des jeweiligen Schutzabdeckungssegmentes 2 befestigt, beim hier dargestellten Ausführungsbeispiel mit dieser vernietet (25).

Mit ihrem freien Ende ragen die laschenartigen Zungen 12 an der Seite des Stützschenkels 4, die zum Abdeckschenkel 3 des gleichen Schutzabdeckungssegmentes 2 weist, in den Faltengrund 8 des Verbindungselementes 5 und gelangen unter zumindest geringfügiger elastischer Verformung bzw. Vorspannung an der Innenwand der Falte zur Anlage. Aufgrund dieser Vorspannung bzw. elastischen Biegeverformung der laschenartigen Zunge 12 kann zum Einen eine federnde Rückstellkraft entgegen der Auszugsrichtung beim Auszug der Schutzabdeckung 2 erzeugt werden und zum anderen kann ein Moment auf die einzelnen Schutzabdeckungssegmenten erzeugt werden, das dazu führt, dass die Abdeckschenkel 3 jeweils benachbarter Schutzabdeckungssegmente aufeinandergedrückt werden. Dabei nimmt dieses Moment beim Auseinenderziehen der Schutzabdeckungssegmente 2 aufgrund der zunehmenden elastischen Biegeverformung der laschenartigen Zungen 12 zu.

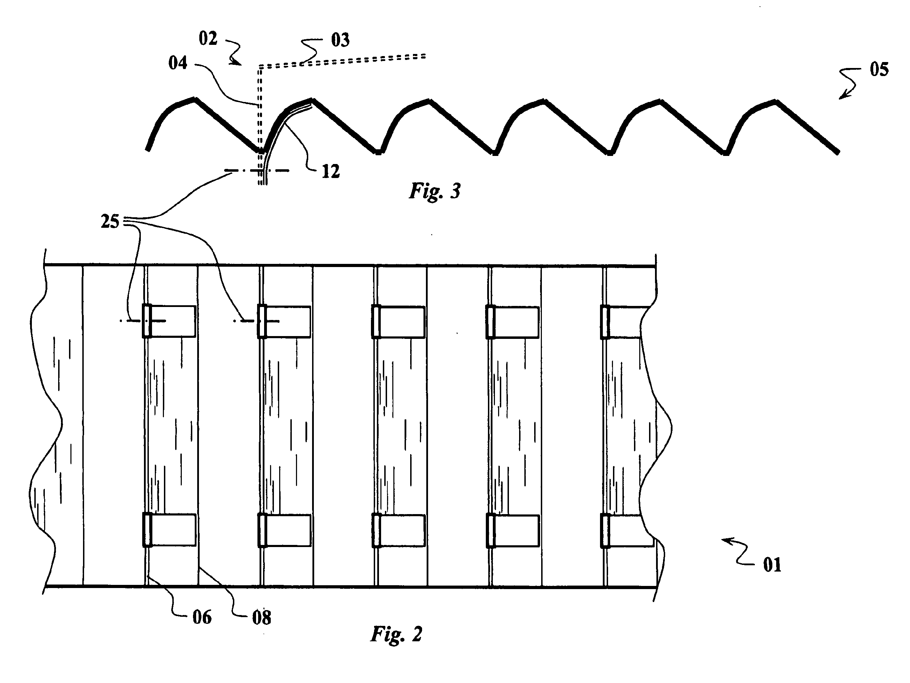

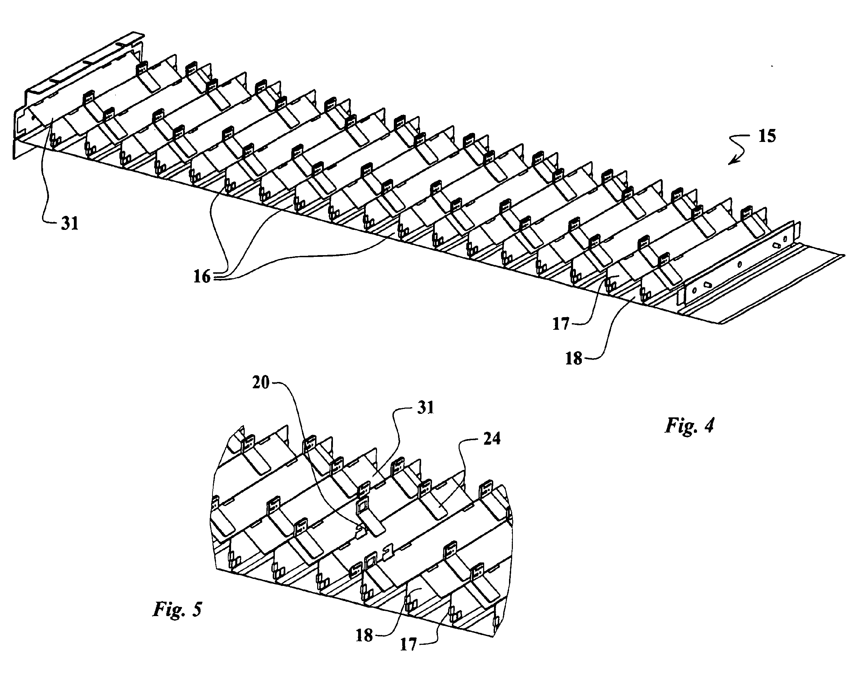

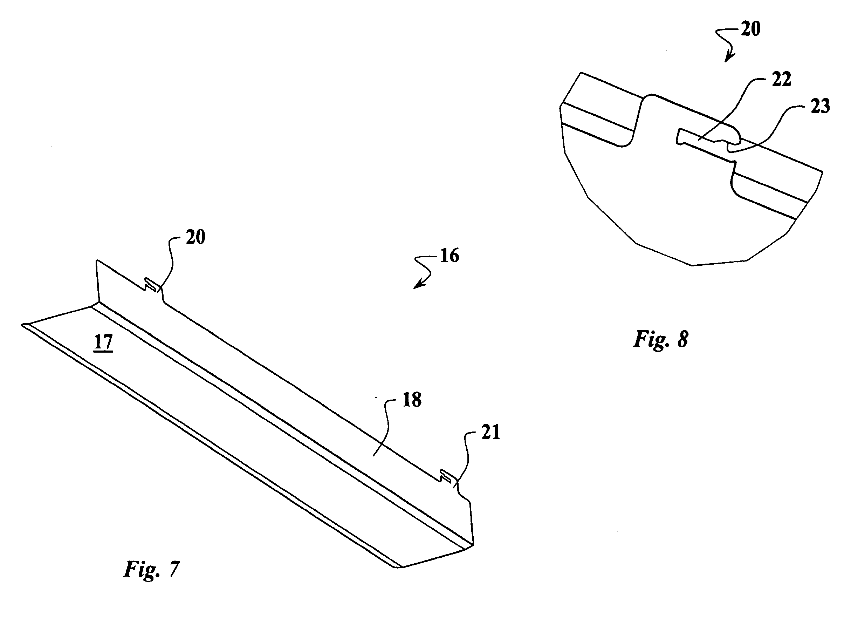

Das in den Fig. 4 bis 10 dargestellte Ausführungsbeispiel einer erfindungsgemäßen Schutzabdeckung 15 weist grundsätzlich den gleichen Aufbau auf wie das in den Fig. 1 bis 3 dargestellte Ausführungsbeispiel. Die Schutzabdeckung 15 weist wiederum eine Mehrzahl von Schutzabdeckungssegmenten 16 auf. Diese sind in den Figuren 7 und 8 näher dargestellt. Das Schutzabdeckungssegment 16 ist im wesentlichen L-förmig ausgebildet mit einem Abdeckschenkel 17 und einem Stützschenkel 18. An der Kante 19 des Stützschenkels 18 sind zwei Laschen 20 und 21 einstückig angeformt, die in nachfolgend beschriebener Weise zur Befestigung je eines Rückstellelementes dienen.

Die beiden Laschen 20, 21 weisen jeweils eine schlitzartige zu einer Seitenkante der Lasche 20, 21 hin offene Ausnehmung 22 auf. Die Ausnehmung weist im Bereich ihrer Öffnung zur Seitenkante einen abgeschrägten Bereich 23 auf, der insbesondere die Einführung des Rückstellelementes erleichtert.

Im Gegensatz zum Ausführungsbeispiel nach den Fig. 1 bis 3 sind die Rückstellelemente des in den Fig. 4 bis 10 gezeigten Ausführungsbeispiels nicht mit den Laschen 20, 21 vernietetet, sondern nach Art eines Formschlusses, insbesondere nach Art einer Clips- oder Rastverbindung, mit den Laschen 20, 21 verbunden.

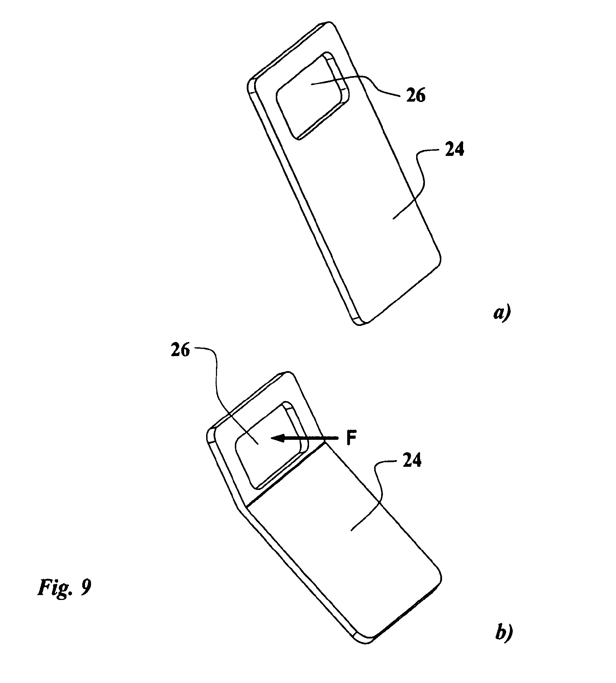

Das Rückstellelement dieses Ausführungsbeispiels ist zweiteilig ausgebildet mit einer laschenartigen Zunge 24 (Fig. 9) und einem Verriegelungselement in Form eines Halters 25 (Fig. 10).

Die laschenartige Zunge 24 ist als zunächst ebene Platte ausgebildet (Fig. 9a) und besteht bei diesem Ausführungsbeispiel aus einem elastischen thermoplastischen Elastomer (TPE) mit einer Materialstärke von 0,6 mm. Im Bereich des ersten Endes weist die laschenartige Zunge 24 eine fensterartige durchgehende Ausnehmung 26 auf. In Fig. 9b ist die Zunge 24 im Einbauzustand gezeigt, d.h. elastisch verformt und damit vorgespannt.

Der Halter 25 besteht im wesentlichen aus einem Material höherer Festigkeit und Härte, beim hier gezeigten Ausführungsbeispiel aus einem Polyoxymethylen (POM). Der Halter 25 weist einen Basisbereich 27 und eine Anlagefläche 28 auf, wobei der Basisbereich 27 an die Anlagefläche 28 einstückig angeformt ist. Die Umfangskontur des Basisbereichs 27 entspricht im wesentlichen der Kontur der Ausnehmung 26 in der Zunge 24, so dass der Halter 25 mit seinem Basisbereich 27 in Richtung des Pfeils F in die Ausnehmung 26 steckbar ist, bis die Anlagefläche 28 an der die Ausnehmung 26 umgebenden Fläche der Zunge zur Anlage gelangt. Aufgrund eines geringen Übermaßes des Basisbereichs im Vergleich zur Ausnehmung 26 wird der Halter dabei verliersicher in der Ausnehmung gehalten.

Der Basisbereich 27 weist eine schlitzartige Ausnehmung 29 auf. Diese Ausnehmung verläuft dabei in einer Ebene, die parallel zur Anlagefläche 28 mit einem Abstand, der der Materialstärke der Zunge 24 entspricht, verläuft. Die Breite dieser schlitzartigen Ausnehmung 29 entspricht dabei im wesentlichen der Materialstärke der Lasche 20, 21 am Stützschenkel 18. Diese Ausnehmung 29 ist im wesentlichen U-förmig ausgebildet. Der Bereich 30 zwischen den beiden Schenkeln des U entspricht dabei im wesentlichen der Breite der schlitzartigen Ausnehmung 22 in der Lasche 20, 21.

Zur Montage der erfindungsgemäßen Schutzabdeckung 15 wird zunächst das faltenbalgartige geformte Verbindungselement 31 mit seinen in den Faltkanten ausgebildeten Ausnehmungen auf die Laschen 20, 21 des Schutzabdeckungssegmentes 16 gesteckt, so dass die Faltkante auf der Kante des Stützschenkels 18 zur Anlage gelangt. Danach wird das wie vorstehend beschriebene Rückstellelement bestehend aus Halter 25 und Zunge 24 seitlich in die Lasche eingeschoben, wobei der Bereich 30 des Halters 25 in die Ausnehmung 22 der Lasche 20, 21 eingeführt wird und die Anlagefläche 28 des Halters von der einen Seite und der die Ausnehmung 26 umgebende Bereich der Zunge 24 von der anderen Seite an der Lasche 20, 21, diese einschließend, zur Anlage gelangt.

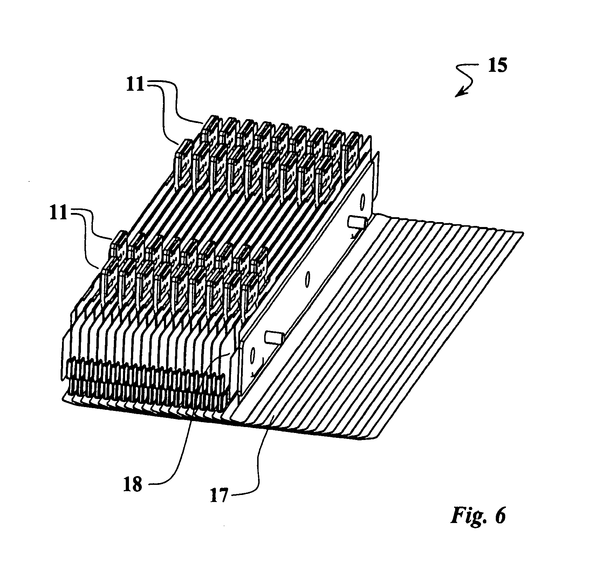

Wie insbesondere aus den Figuren 4, 5 und 6 zu entnehmen ist, sind bei dem dort dargestellten Ausführungsbeispiel die Rückstellelemente benachbarter Schutzabdeckungssegmente 16 seitlich gegeneinander versetzt. Dies erlaubt eine besonders enge Paketierung der Schutzabdeckungssegmente 16 beim Aufschieben der Schutzabdeckung, wie in Fig. 6 dargestellt ist. Zu diesem Zweck sind die jeweiligen Laschen benachbarter Schutzabdeckungssegmente versetzt gegeneinander angeordnet. Es ist jedoch in gleicher Weise möglich, dass die Laschen benachbarter Schutzabdeckungselemente identisch, d.h. insbesondere fluchtend, angeordnet sind, wobei jedoch die Rückstellelemente nicht an unmittelbar hintereinander angeordneten Laschen, sondern versetzt zueinander angeordnet sind. So kann beispielsweise an jedem 1, 3, 5 usw. Schutzabdeckungssegment ein Rückstellelement jeweils an einer ersten und dritten Lasche angeordnet sein und an jedem 2, 4, 6 usw. Schutzabdeckungselement jeweils an einer zweiten und vierten Lasche.

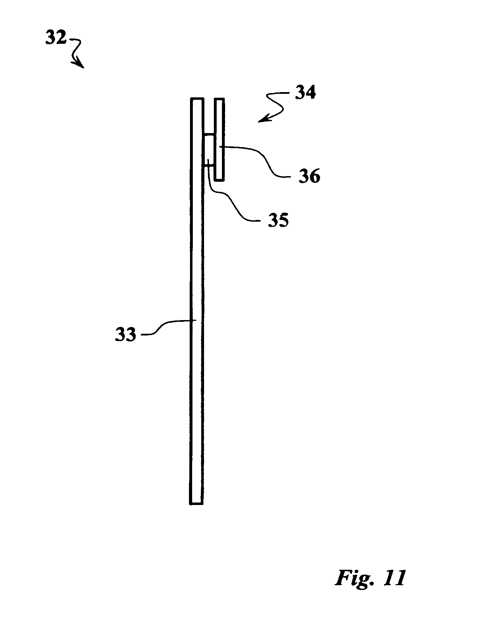

In der Fig. 11 ist ein weiteres Ausführungsbeispiel eines Rückstellelementes 32 dargestellt. Dieses ist einstückig ausgeführt und weist eine laschenartige Zunge 33 und ein Verriegelungselement 34 auf. Das Verriegelungselement 34 besteht im wesentlichen aus einem ersten Bereich 35, der in die Ausnehmung 22 der Lasche einschiebbar ist, und einem zweiten Bereich 36, der den Bereich 35 randseitig überragt. Der Abstand zwischen der zum Verriegelungselement weisenden Fläche der Zunge 33 und der zur Zunge weisenden Fläche des Bereichs 36 entspricht dabei im wesentlichen der Materialstärke der Lasche 20,21.

## Patentansprüche

1. Schutzabdeckung mit einer Mehrzahl von im wesentlichen L-förmigen Schutzabdeckungssegmenten (2, 16) mit einem Abdeckschenkel (3, 17) und einem Stützschenkel (4, 18), die so relativ zueinander angeordnet sind, dass sie teleskopartig gegeneinander verschiebbar sind, wobei jeweils die Abdeckschenkel (3, 17) benachbarter Schutzabdeckungssegmente (2, 16) unter Bildung einer insgesamt im wesentlichen geschlossenen Fläche aufeinander zur Anlage gelangen, und mit mindestens einem band- oder bahnförmigen flexiblen Verbindungselement (5, 31), das die Stützschenkel (4, 18) der Schutzabdeckungssegmente (2, 16) zumindest zugkraftübertragend miteinander verbindet,
**dadurch gekennzeichnet,**
**dass** an den Stützschenkeln (4, 18) jeweils mindestens ein elastisches Rückstellelement (11, 32) derart angeordnet ist, dass es mit seinem ersten Ende am Stützschenkel (4, 18) befestigt ist und mit seinem zweiten Ende unter Vorspannung an einem Abschnitt des Verbindungselementes (5, 31) diesen in Richtung des Stützschenkels (4, 18) drückend anliegt.

2. Schutzabdeckung nach Anspruch 1,
**dadurch gekennzeichnet,**
**dass** das Verbindungselement (5, 31) ziehharmonikaartig nach Art eines Faltenbalges mit Faltkanten parallel zu den Längskanten der Schenkel (3, 4, 17, 18) der Schutzabdeckungssegmente (2, 16) ausgebildet ist, wobei zwischen zwei benachbarten Schutzabdeckungssegmenten (2, 16) bzw. zwischen den Stützschenkeln (4, 18) zweier benachbarter Schutzabdeckungssegmente (2, 16) mindestens eine Falte des Verbindungselementes (5, 31) derart angeordnet ist, dass eine erste Faltkante (7) die Kante des Stützschenkels (4, 18) eines Schutzabdeckungssegmentes übergreift bzw. auf dieser aufliegt, eine zweite Faltkante (8) die Kante des Stützschenkels (4, 18) des benachbarten Schutzabdeckungssegmentes (2, 16) übergreift bzw. auf dieser aufliegt und die dazwischen liegende Faltkante den Faltengrund (8) bildet.

3. Schutzabdeckung nach Anspruch 1 oder 2,
**dadurch gekennzeichnet,**
**dass** das Verbindungselement (5, 31) im wesentlichen aus einem eigensteifen Kunststoffmaterial, insbesondere Polypropylen (PP) oder dergleichen, besteht.

4. Schutzabdeckung nach einem der Ansprüche 1 bis 3,
**dadurch gekennzeichnet,**
**dass** die Materialstärke des Verbindungselementes (5, 31) zwischen 0,3 und 1,5 mm, vorzugsweise zwischen 0,5 und 1,0 mm, beträgt.

5. Schutzabdeckung nach einem der Ansprüche 1 bis 4,
**dadurch gekennzeichnet,**
**dass** die Längskanten der Stützschenkel (4, 18) der Schutzabdeckungssegmente (2, 16) jeweils mindestens eine vorzugsweise einstückig angeformte Lasche (9, 20, 21) aufweisen, die im wesentlichen in der Schenkelebene über die Längskante hervorragt, wobei das Verbindungselement (5, 31) im Bereich seiner Faltkanten (7, 8), die auf der Kante des Stützschenkels (4, 18) aufliegen oder diese übergreifen, mit schlitzartigen Ausnehmungen (10) versehen ist, die von den Laschen (9, 20, 21) durchgriffen werden.

6. Schutzabdeckung nach einem der Ansprüche 1 bis 5,
**dadurch gekennzeichnet,**
**dass** das Rückstellelement (11, 32) mindestens eine laschenartige Zunge (12, 24) aufweist, die im Bereich ihres ersten Endes an einer der Laschen (9, 20, 21) am Stützschenkel (4, 18) eines Schutzabdeckungssegmentes (2, 16) befestigt ist und mit ihrem freien gegenüberliegenden Ende an der Seite des Stützschenkels (4, 18), die zum Abdeckschenkel (3, 17) des gleichen Schutzabdeckungssegmentes (2, 16) weist, in Richtung des Faltengrundes (8) des Verbindungselementes (5, 31) ragt.

7. Schutzabdeckung nach Anspruch 6,
**dadurch gekennzeichnet,**
**dass** die Befestigung des Rückstellelementes (11, 32) nach Art einer Clips- oder Rastverbindung erfolgt.

8. Schutzabdeckung nach Anspruch 7,
**dadurch gekennzeichnet,**
**dass** die Laschen (9, 20, 21) eine schlitzartige zu einer Seitenkante der Lasche hin offene Ausnehmung (22) aufweisen und die ersten Enden der laschenartigen Zunge (12, 24, 33) des Rückstellelementes mit einem Verriegelungselement versehen sind, das in die Ausnehmung (22) der Lasche (9, 20, 21) diese bereichsweise hintergreifend einbringbar ist.

9. Schutzabdeckung nach Anspruch 8,
**dadurch gekennzeichnet,**
**dass** das Verriegelungselement (34) einstückig an die laschenartige Zunge (33) angeformt ist und einen ersten Bereich (35), der in die Ausnehmung (22) der Lasche (9, 20, 21) einschiebbar, und einen zweiten Bereich (36), der den ersten Bereich (35) unter Bildung eines Randes zumindest abschnittsweise überragt und der dem ersten Ende der laschenartigen Zunge (33) mit einem Abstand, der im wesentlichen der Dicke der Lasche (9, 20, 21) entspricht, gegenüberliegt, aufweist.

10. Schutzabdeckung nach Anspruch 8,
**dadurch gekennzeichnet,**
**dass** das Verriegelungselement als separater Halter (25) mit einer Anlagefläche (28) und einem Basisbereich (27) ausgebildet ist und die laschenartige Zunge (24) des Rückstellelementes im Bereich ihres ersten Endes eine Ausnehmung (26) aufweist, durch die der Halter (25) mit seinem Basisbereich (27) steckbar ist.

11. Schutzabdeckung nach Anspruch 10,
**dadurch gekennzeichnet,**
**dass** der Basisbereich (27) eine schlitzartige Ausnehmung (29) aufweist, mit der der Halter (25) unter Anordnung des ersten Bereichs der laschenartigen Zunge (24) des Rückstellelementes zwischen der Anlagefläche (28) und der Lasche (20, 21) des Schutzabdeckungssegmentes in die schlitzartige Ausnehmung der Lasche (20, 21) diese bereichsweise übergreifend einschiebbar ist.

12. Schutzabdeckung nach Anspruch 10 oder 11,
**dadurch gekennzeichnet,**
**dass** der Basisbereich (27) und/oder die Ausnehmung (26) eine klemmende oder rastende Befestigungseinrichtung aufweisen, mit der der Halter (25) in der Ausnehmung (26) der laschenartigen Zunge (24) fixierbar ist.

13. Schutzabdeckung nach einem der Ansprüche 6 bis 12,
**dadurch gekennzeichnet,**
**dass** die laschenartigen Zungen (12, 24, 33) in einer oder in beiden Achsrichtungen konkav oder konvex ausgebildet sind oder auf ihrer zum Verbindungselement (5, 31) weisenden Fläche punkt- oder linienförmig vorspringende Kontaktelemente aufweisen.

14. Schutzabdeckung nach einem der Ansprüche 6 bis 13,
**dadurch gekennzeichnet,**
**dass** die von der Längskante des Stützschenkels (4, 18) wegweisenden Oberkanten der laschenartigen Zungen (12, 24, 33) und/oder der Verriegelungselemente, insbesondere der Anlageflächen (28) der Halter (25), zumindest geringfügig über die Oberkante der an den Stützschenkeln (4, 18) der Schutzabdeckungssegmente (2, 16) angeordneten Laschen hervorragen (9, 20, 21) und als Gleitflächen ausgebildet sind.

15. Schutzabdeckung nach einem der Ansprüche 5 bis 14,
**dadurch gekennzeichnet,**
**dass** jeder Stützschenkel (4, 18) mindestens zwei Laschen (9, 20, 21) aufweist, wobei die Rückstellelemente (11, 32) benachbarter Schutzabdeckungssegmente (2, 16) an gegeneinander versetzt angeordneten Laschen angeordnet sind.

16. Schutzabdeckung nach einem der Ansprüche 6 bis 15,
**dadurch gekennzeichnet,**
**dass** die laschenartige Zunge (12, 24, 33) des Rückstellelementes (11, 32) im wesentlichen aus einem Kunststoff- oder Kunststoffverbundmaterial, insbesondere aus einem thermoplastischen Elastomer TPE, besteht.

17. Schutzabdeckung nach einem der Ansprüche 6 bis 16,
**dadurch gekennzeichnet,**
**dass** das Verriegelungselement, insbesondere der Halter (25), im wesentlichen aus einem Kunststoff- oder Kunststoffverbundmaterial, insbesondere aus einem Polyoxymethylen (POM), besteht.

18. Schutzabdeckung nach einem der Ansprüche 1 bis 17,
**gekennzeichnet durch**
eine Auszugsbegrenzung, inbesondere in Form einer Bandsperre.

19. Schutzabdeckung nach einem der Ansprüche 1 bis 18,
**gekennzeichnet durch**
einen an der Rückseite der Schutzabdeckung angeordneten Faltenbalg.

## Claims

1. A protective covering with a plurality of substantially L-shaped protective covering segments (2, 16) with a cover leg (3, 17) and a support leg (4, 18), which are arranged relative to one another in such a way that they are telescopically slidable with respect to one another, wherein the cover legs (3, 17) of adjacent protective covering segments (2, 16) respectively come to bear on one another thus forming an overall substantially closed surface, and with at least one flexible band-shaped or web-shaped connecting element (5, 31) which connects the support legs (4, 18) of the protective covering segments (2, 16) with each other so as to at least transfer a tensile force,
**characterised in that**
on the support legs (4, 18), at least one elastic reset element (11, 32) is respectively arranged such that it is fastened to the support leg (4, 18) with its first end and abuts with its second end with prestressing against a section of the connecting element (5, 31), pushing said section in the direction of the support leg (4, 18).

2. The protective covering according to claim 1,
**characterised in that**
the connecting element (5, 31) is formed like an accordion in the manner of bellows with folded edges parallel to the longitudinal edges of the legs (3, 4, 17, 18) of the protective covering segments (2, 16), wherein between two adjacent protective covering segments (2, 16) or between the support legs (4, 18) of two adjacent protective covering segments (2, 16) at least one fold of the connecting element (5, 31) is arranged such that a first folded edge (7) overlaps or rests on the edge of the support leg (4, 18) of a protective covering segment, a second folded edge (8) overlaps or rests on the edge of the support leg (4, 18) of the adjacent protective covering segment (2, 16) and the interposed folded edge forms the bottom of the fold (8).

3. The protective covering according to claim 1 or 2, **characterised in that**
the connecting element (5, 31) is substantially comprised of an inherently rigid plastic material, in particular polypropylene (PP) or the like.

4. The protective covering according to any of the claims 1 to 3, **characterised in that**
the material thickness of the connecting element (5, 31) is between 0.3 and 1.5 mm, preferably between 0.5 and 1.0 mm.

5. The protective covering according to any of the claims 1 to 4, **characterised in that**
the longitudinal edges of the support legs (4, 18) of the protective covering segments (2, 16) each comprise at least one flap (9, 20, 21) preferably integrally formed thereon, which substantially protrudes beyond the longitudinal edge in the leg plane, wherein in the area of its folded edges (7, 8) which rest on or overlap the edge of the support leg (4, 18) the connecting element (5, 31) is provided with slit-type recesses (10), the flaps (9, 20, 21) reaching through said recesses.

6. The protective covering according to any of the claims 1 to 5, **characterised in that**
the reset element (11, 32) comprises at least one flap-type tongue (12, 24), which in the region of its first end is fastened to one of the flaps (9, 20, 21) on the support leg (4, 18) of a protective covering segment (2, 16) and with its free opposite end on the side of the support leg (4, 18) facing towards the cover leg (3, 17) of the same protective covering segment (2, 16) protrudes in the direction of the bottom of the fold (8) of the connecting element (5, 31).

7. The protective covering according to claim 6,
**characterised in that**
the fastening of the reset element (11, 32) is realized in the manner of a clip or snap-on connection.

8. The protective covering according to claim 7,
**characterised in that**
the flaps (9, 20, 21) have a slit-type recess (22) open towards a lateral edge of the flap and the first ends of the flap-type tongue (12, 24, 33) of the reset element are provided with a locking element, which can be introduced into the recess (22) of the flap (9, 20, 21) so as to partially engage behind it.

9. The protective covering according to claim 8,
**characterised in that**
the locking element (34) is formed integrally on the flap-type tongue (33) and comprises a first region (35), which is slidable into the recess (22) of the flap (9, 20, 21), and a second region (36), which at least partially protrudes beyond the first region (35), thus forming an edge, and which lies opposite the first end of the flap-type tongue (33) with a distance substantially corresponding to the thickness of the flap (9, 20, 21).

10. The protective covering according to claim 8,
**characterised in that**
the locking element is realized as a separate holder (25) with an abutment surface (28) and a base region (27) and the flap-type tongue (24) of the reset element has a recess (26) in the region of its first end, through which the holder (25) can be pushed with its base region (27).

11. The protective covering according to claim 10,
**characterised in that**
the base region (27) has a slit-type recess (29) with which the holder (25) can be slid into the slit-type recess of the flap (20, 21), partially overlapping said recess, with the first region of the flap-type tongue (24) of the reset element being arranged between the abutment surface (28) and the flap (20, 21) of the protective covering segment.

12. The protective covering according to claim 10 or 11,
**characterised in that**
the base region (27) and/or the recess (26) have a clamping or snap-on fastening device by means of which the holder (25) can be fixed in the recess (26) of the flap-type tongue (24).

13. The protective covering according to any of the claims 6 to 12,
**characterised in that**
the flap-type tongues (12, 24, 33) are formed concave or convex in one or in both axial directions or on their surface facing towards the connection element (5, 31) comprise contact elements which protrude in the form of a point or a line.

14. The protective covering according to any of the claims 6 to 13,
**characterised in that**
the upper edges of the flap-type tongues (12, 24, 33) and/or of the locking elements, in particular of the abutment surfaces (28) of the holders (25), said upper edges facing away from the longitudinal edge of the support leg (4, 18), protrude at least slightly beyond the upper edge of the flaps (9, 20, 21) arranged on the support legs (4, 18) of the protective covering segments (2, 16) and are formed as sliding surfaces.

15. The protective covering according to any of the claims 5 to 14,
**characterised in that**
each support leg (4, 18) comprises at least two flaps (9, 20, 21), wherein the reset elements (11, 32) of adjacent protective covering segments (2, 16) are arranged on flaps which are offset against one another.

16. The protective covering according to any of the claims 6 to 15,
**characterised in that**
the flap-type tongue (12, 24, 33) of the reset element (11, 32) is substantially made of a plastic material or plastic compound material, in particular of a thermoplastic elastomer TPE.

17. The protective covering according to any of the claims 6 to 16,
**characterised in that**
the locking element, in particular the holder (25), is substantially made of a plastic material or plastic compound material, in particular of a polyoxymethylene (POM).

18. The protective covering according to any of the claims 1 to 17,
**characterised by**
an extension limitation device, in particular in the form of a bandtype lock.

19. The protective covering according to any of the claims 1 to 18,
**characterised by**
bellows being arranged on the rear side of the protective covering.

## Revendications

1. Couverture de protection comprenant une pluralité de segments de couverture de protection (2, 16) essentiellement en forme de L ayant une branche de couverture (3, 17) et une branche de support (4, 18) qui sont disposées relativement l'une par rapport à l'autre de telle manière qu'elles puissent être glissées télescopiquement l'une contre l'autre, les branches de couverture (3, 17) de segments de couverture de protection (2, 16) adjacents venant en appui respectivement l'une sur l'autre en formant une surface essentiellement fermée dans son ensemble, et ayant au moins un élément de liaison (5, 31) flexible en forme de ruban ou bande qui relie les branches de support (4, 18) des segments de couverture de protection (2, 16) au moins d'une manière transmettant des forces de traction,
**caractérisée en ce qu'**
au moins un élément de rappel (11, 32) élastique est disposé sur chacun des branches de support (4, 18) de telle manière qu'il soit attaché avec sa première extrémité à la branche de support (4, 18) et, sous précontrainte, il vienne en appui avec sa deuxième extrémité sur une partie de l'élément de liaison (5, 31) en la poussant dans la direction de la branche de support (4, 18).

2. Couverture de protection selon la revendication 1,
**caractérisée en ce que**
l'élément de liaison (5, 31) est formé sous forme d'accordéon à la manière d'un soufflet ayant des arêtes de pliage parallèlement aux bords longitudinaux des branches (3, 4, 17, 18) des segments de couverture de protection (2, 16), au moins un pli de l'élément de liaison (5, 31) étant disposé entre deux segments de couverture de protection (2, 16) adjacents, soit entre les branches de support (4, 18) de deux segments de couverture de protection (2, 16) adjacents, de telle manière qu'une première arête de pliage (7) s'engage par-dessus le bord de la branche de support (4, 18) d'un segment de couverture de protection ou repose sur celui-ci, une deuxième arête de pliage (8) s'engage par-dessus le bord de la branche de support (4, 18) du segment de couverture de protection (2, 16) adjacent ou repose sur celui-ci et l'arête de pliage intermédiaire forme le fond de pli (8).

3. Couverture de protection selon la revendication 1 ou 2, **caractérisée en ce que**
l'élément de liaison (5, 31) se compose essentiellement d'une matière plastique à rigidité propre, en particulier de polypropylène (PP) ou une matière semblable.

4. Couverture de protection selon les revendications 1 à 3, **caractérisée en ce que**
l'épaisseur du matériau de l'élément de liaison (5, 31) est comprise entre 0,3 et 1,5 mm, de préférence entre 0,5 et 1,0 mm.

5. Couverture de protection selon l'une quelconque des revendications 1 à 4,
**caractérisée en ce que**,
les bords longitudinaux des branches de support (4, 18) des segments de couverture de protection (2, 16) ont chacun au moins une languette (9, 20, 21) qui est formée de préférence d'un seul tenant avec lesdits bords et qui fait saillie au-delà du bord longitudinal essentiellement dans le plan de branche, dans lequel l'élément de liaison (5, 31), dans la région de ses arêtes de pliage (7, 8) venant en appui sur le bord de la branche de support (4, 18) ou s'en engageant par-dessus, est pourvu d'évidements (10) en forme de fentes qui sont pénétrés par les languettes (9, 20, 21).

6. Couverture de protection selon l'une quelconque des revendications 1 à 5,
**caractérisée en ce que**
l'élément de rappel (11, 32) a au moins un ardillon (12, 24) en forme de languette qui es fixé, dans la région de sa première extrémité, à une des languettes (9, 20, 21) sur la branche de support (4, 18) d'un segment de couverture de protection (2, 16) et fait saillie dans la direction du fond de pli (8) de l'élément de liaison (5, 31) avec son extrémité libre opposée sur le côté de la branche de support (4, 18) qui est orienté vers la branche de couverture (3, 17) du même segment de couverture de protection (2, 16).

7. Couverture de protection selon la revendication 6,
**caractérisée en ce que**
l'élément de rappel (11, 32) est fixé à la manière d'une liaison à clips ou d'une liaison d'encliquetage.

8. Couverture de protection selon la revendication 7,
**caractérisée en ce que**
les languettes (9, 20, 21) ont un évidement (22) en forme de fente étant ouvert vers un bord latéral de la languette et les premières extrémités de l'ardillon (12, 24, 33) en forme de languette de l'élément de rappel sont pourvues d'un élément de verrouillage qui peut être introduit dans l'évidement (22) de la languette (9, 20, 21) en venant en prise derrière celui-ci par zones.

9. Couverture de protection selon la revendication 8,
**caractérisée en ce que**
l'élément de verrouillage (34) est formé d'un seul tenant avec l'ardillon (33) en forme de languette et comprend une première partie (35) qui peut être insérée dans l'évidement (22) de la languette (9, 20, 21) et une deuxième partie (36) qui dépasse la première partie (35) au moins par sections en formant une bordure et qui fait face à la première extrémité de l'ardillon (33) en forme de languette à une distance qui correspond essentiellement à l'épaisseur de la languette (9, 20, 21).

10. Couverture de protection selon la revendication 8,
**caractérisée en ce que**
l'élément de verrouillage est formé comme support (25) séparé ayant une surface d'appui (28) et une partie de base (27) et que l'ardillon (24) en forme de languette de l'élément de rappel a un évidement (26) dans la région de sa première extrémité, le support (25) pouvant être passé avec sa partie de base (27) à travers ledit évidement (26).

11. Couverture de protection selon la revendication 10,
**caractérisée en ce que**
la partie de base (27) a un évidement en forme de fente (29) avec lequel le support (25) peut être inséré dans l'évidement en forme de fente de la languette (20, 21) en s'engageant par-dessus ledit évidement par zones et en disposant la première partie de l'ardillon (24) en forme de languette de l'élément de rappel entre la surface d'appui (28) et la languette (20, 21) du segment de couverture de protection.

12. Couverture de protection selon les revendications 10 ou 11, **caractérisée en ce que**
la partie de base (27) et/ou l'évidement (26) ont un dispositif de fixation verrouillant ou arrêtant par lequel le support (25) peut être fixé dans l'évidement (26) de l'ardillon (24) en forme de languette.

13. Couverture de protection selon l'une quelconque des revendications 6 à 12,
**caractérisée en ce que**
les ardillons (12, 24, 33) en forme de languette sont concaves ou convexes dans une ou dans les deux directions axiales ou qu'ils ont des éléments de contact ponctuellement ou linéairement saillants sur leur surface orientée vers l'élément de liaison (5, 31).

14. Couverture de protection selon l'une quelconque des revendications 6 à 13,
**caractérisée en ce que**
les bords supérieurs des ardillons (12, 24, 33) en forme de languettes et/ou des éléments de verrouillage, en particulier les bords supérieurs des surfaces d'appui (28) des supports (25), lesdits bords étant détournés du bord longitudinal de la branche de support (4, 18), dépassent au moins légèrement le bord supérieur des languettes (9, 20, 21) disposées sur les branches de support (4, 18) des éléments de couverture de protection (2, 16) et sont formés comme surfaces de glissement.

15. Couverture de protection selon l'une quelconque des revendications 5 à 14,
**caractérisée en ce que**
chaque branche de support (4, 18) a au moins deux languettes (9, 20, 21), les éléments de rappel (11, 32) de segments de couverture de protection (2, 16) adjacents étant disposés sur des languettes qui sont disposées de manière décalée l'une par rapport à l'autre.

16. Couverture de protection selon l'une quelconque des revendications 6 à 15,
**caractérisée en ce que**
l'ardillon (12, 24, 33) en forme de languette de l'élément de rappel (11, 32) se compose essentiellement d'une matière plastique ou d'une matière plastique composite, en particulier d'un élastomère thermoplastique TPE.

17. Couverture de protection selon l'une quelconque des revendications 6 à 16,
**caractérisée en ce que**
l'élément de verrouillage, en particulier le support (25), se compose essentiellement d'une matière plastique ou d'une matière plastique composite, en particulier d'un polyoxyméthylène (POM).

18. Couverture de protection selon l'une quelconque des revendications 1 à 17,
**caractérisée par**
une limitation d'extraction, en particulier sous forme d'un blocage à bande.

19. Couverture de protection selon l'une quelconque des revendications 1 à 18,
**caractérisée par**
un soufflet qui est disposé sur l'arrière de la couverture de protection.
